# EUROPEAN PATENT APPLICATION

(11) **EP 2 151 733 A2**
(43) Date of publication of application: **10.02.2010**
(21) Application number: 09010182.5
(22) Date of filing: 06.08.2009
(51) Int. Cl.: G05G 5/00, G06F 3/048, G09G 3/34

(54) **Portable display devices and programs**

(30) Priority: 07.08.2008 JP 2008204438
(71) Applicant: Brother Kogyo Kabushiki Kaisha, Nagoya-shi, Aichi-ken 467-8561 (JP)
(72) Inventor: Sugamata, Hiroki, Nagoya-shi Aichi 467-8562 (JP)
(74) Representative: Kuhnen & Wacker

(57) **Abstract**

A portable display device (1) includes a non-volatile display portion (21) configured to display information even when power from a power source is turned off, and a controller (10) configured to drive the display portion (21) to display information in the display portion (21). The controller (10) is configured to replace information displayed in the display portion (21) with another information, which is different from the information displayed in the display portion (21), by turning power on repeatedly at a predetermined timing in a state of power-off.

## Description

### BACKGROUND OF THE INVENTION

### 1. Field of the Invention

The present invention relates to portable display devices and programs, and more particularly to portable display devices and programs for maintaining a display image or information in the portable display devices even when power from a power source is turned off.

### 2. Description of Related Art

A known portable display device, e.g., electronic paper, includes a non-volatile display portion configured to maintain display information, e.g., an image, even when power supply from a power source is turned off, as described in Japanese Laid-Open Patent Publication No. 2007-187927. The portable display device is configured to maintain information, which was displayed in the non-volatile display device immediately before power is turned off, in a state of power-off. Therefore, a user may view the information even in a state of power-off. For example, when power is turned off in a state in which information is being displayed in the non-volatile display portion, the information may be displayed continuously in the display portion.

The above-described display device may constantly display the information, which was displayed immediately before power is turned off, in a state of power-off. Therefore, the same information may be maintained until the information is rewritten or replaced with another information as power is turned on again.

### SUMMARY OF THE INVENTION

It is the object of the present invention to provide a portable display device which overcomes these and other shortcomings of the related art. The object is attained by a portable display device according to claim 1 and by a computer readable medium according to claim 8.In the portable display device according to the invention, even in a state of power-off, power may be turned on at the predetermined timing to change the information displayed in the display portion.

The predetermined timing may be a preset time or a preset period of time, which may make a user recognize the time or period of time. Changing or updating e.g., schedule, calendar, or countdown, every preset time or period of time may be convenient.

The controller may be configured to request for the another information to an external device that stores the another information, after power is turned on at the predetermined timing, to obtain the another information from the external device. The controller may be configured to display the another information obtained from the external device. Thus, the information displayed in the display portion may be replaced with the another information stored in the external device.

The controller may be configured to determine the predetermined timing when the controller receives a request of start-up of the portable display device from an external device that stores the another information. The controller may be configured to turn power on at the predetermined timing to obtain the another information from the external device. The controller may be configured to display the another information in the display portion. The information displayed in the display portion may be replaced with the another information stored in the external device by receiving the another information to be replaced with the information displayed in the display portion, from the external device.

The portable display device may further include an information storage portion configured to store one or a plurality of pieces of information to be displayed in the display portion in the state of power-off. The controller may be configured to select one piece of information to be displayed in the display portion from the plurality of pieces of information stored in the information storage portion repeatedly at the predetermined timing. The controller may be configured to display the one piece of information in the display portion. Even in a state of power-off, any piece of information to be displayed in the display portion may be selected from the plurality of pieces of information. Thus, variation in information to be displayed in the display portion may increase.

The controller may be configured to display, in the state of power-off, information associated with the information displayed in the display portion immediately before power is turned off, among the plurality of pieces of information stored in the information storage portion. By displaying information associated with the information that a user was viewing, the information displayed in states of power-on and power-off may be associated with each other.

The information associated with the information displayed in the display portion may be stored in a folder, which stores the information displayed in the display portion. The information associated with the information displayed in the display portion may be the same information type as that of the information displayed in the display portion.

Other objects, features, and advantages of embodiments of the present invention will be apparent to persons of ordinary skill in the art from the following description of preferred embodiments with reference to the accompanying drawings.

### BRIEF DESCRIPTION OF THE DRAWINGS

For a more complete understanding of the present invention, the needs satisfied thereby, and the objects, features, and advantages thereof, reference now is made to the following description taken in connection with the accompanying drawings.
Fig. 1 is a front view of a portable display device according to an embodiment of the invention.
Fig. 2 is a schematic showing an electrical configuration of the portable display device, an external device and a server according to an embodiment of the invention.
Figs. 3A and 3B are schematics showing power-off display tables.
Figs. 4A-4F are schematics showing an electrophoretic display portion of the portable display device.
Figs. 5A-5F are schematics showing power-off display information displayed in the electrophoretic display portion.
Fig. 6 is a flowchart showing a process performed in the portable display device.
Fig. 7 is a flowchart showing a process performed in the portable display device.
Fig. 8 is a flowchart showing a process performed in the portable display device.
Fig. 9 is a flowchart showing a process performed in the portable display device.
Fig. 10 is a flowchart showing a process performed in the portable display device.
Fig. 11 is a flowchart showing a process performed in the external device.
Fig. 12 is a flowchart showing processes performed in the portable display device and the server.
Fig. 13 is a flowchart showing processes performed in the portable display device and the server.

### DETAILED DESCRIPTION OF EMBODIMENTS OF THE INVENTION

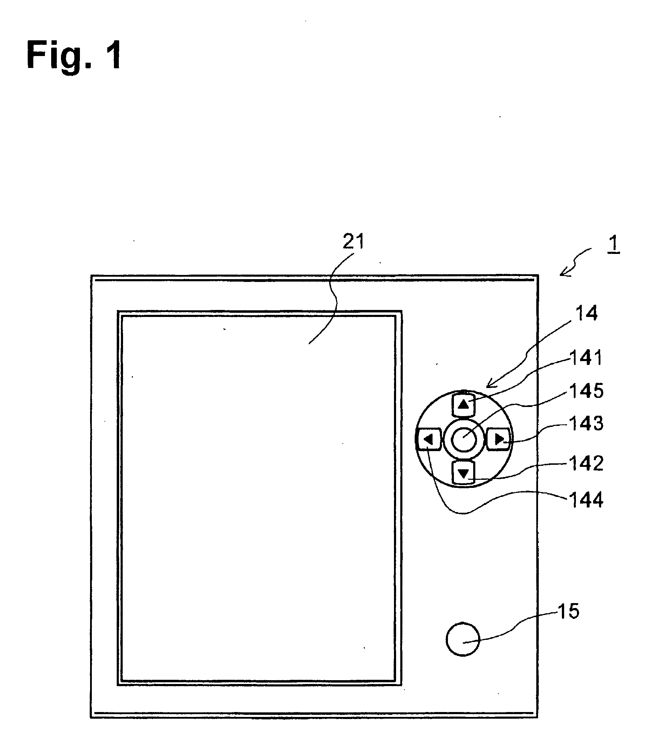

Embodiments of the present invention and their features and technical advantages may be understood by referring to Figs. 1-13, like numerals being used for like corresponding portions in the various drawings.

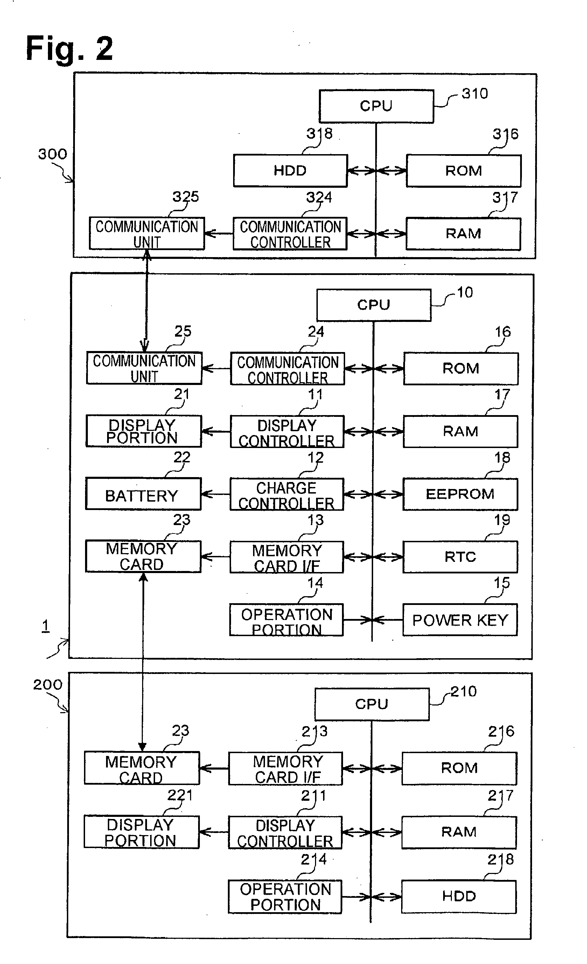

Referring to Fig. 1, a portable display device 1 according to an embodiment of the present invention may be of substantially a rectangular parallelepipedonal shape. Portable display device 1 may comprise a non-volatile display portion 21, e.g., an electrophoretic display portion. Display portion 21 may be disposed on a front surface of portable display device 1. A right side of portable display device 1 in Fig. 1 may comprise a card slot (not shown) into which a memory card 23 in Fig. 2 may be inserted. Portable display device 1 may display contents stored in memory card 23 in display portion 21. In this embodiment, information, e.g., at least one of a text, a freeze-frame image, and a moving image, may be displayed based on contents. Content data may comprise at least one piece of data for displaying a text, a freeze-frame image, and a moving image

A right portion of portable display device 1 in Fig. 1 adjacent to display portion 21 may comprise operation keys 14 that may be operated by a user. Operation keys 14 may comprise an enter key 145, and an up arrow key 141, a down arrow key 142, a right arrow key 143 and a left arrow key 144 that may be disposed on the upper, lower, right and left side of enter key 145, respectively. For example, up arrow key 141 and down arrow key 142 may be used to select a content in a screen listing contents or a menu screen. Right arrow key 143 and left arrow key 144 may be used to turn pages of a content displayed in display portion 21. A content stored in memory card 23 may be displayed in display portion 21 or instructions for various settings may be provided, with the operations of operation keys 14 according to the information or screen displayed in display portion 21.

A power key 15 may be disposed on a portion of device 1 below operation keys 14 in Fig. 1. Power key 15 may provide instructions for turning power on or off.

Referring to Fig. 2, device 1 may comprise a central processing unit (CPU) 10, a display controller 11, a charge controller 12, a memory card interface (I/F) 13, operation keys 14, power key 15, a read-only memory (ROM) 16, a random access memory (RAM) 17, an electrically erasable programmable read-only memory (EEPROM) 18, a real time clock (RTC) 19, a communication controller 24 and a commutation unit 25.

CPU 10 may perform controls of device 1. ROM 16 may store various data and programs for operating device 1. RAM 17 may temporarily store various data. EEPROM 18 may be a non-volatile memory. RTC 19 may measure time. Display controller 11 may control display portion 21 to display information therein. Memory card I/F 13 may control reading/writing of data from/into memory card 23. Communication controller 24 may control communication unit 25 to allow communication unit 25 to communicate with other devices, e.g., a server 300. Device 1 may be driven by power supplied from a battery 22 when power is not supplied from an external power source (not shown). There may be two power supply routes from a power source, e.g., battery 22 or the external power source, one for CPU 10 and the other for peripheral devices, such as ROM 16, RAM 17, EEPROM 18, and display controller 11. Charge controller 12 may control charging to battery 22 from the external power source.

In a state of power-off, when power key 15 is pressed or any of operation keys 14 is pressed, an instruction to turn power on may be provided. CPU 10 may be placed in a normal operation mode. Power may be supplied to the peripheral devices. Thus, device 1 may be brought into an operational state. When power key 15 is pressed in a state of power-on, an instruction to turn power off may be provided. Power supply to the peripheral devices may be suspended or stopped. CPU 10 may be placed to a power-saving mode in which its power consumption may be more saved than in its normal operation mode. When a user does not operate any operation keys 14 in a state of power-on for a predetermined period of time, e.g., power-off setting time, device 1 may be determined as a non-operating state. At this time also, power may be turned off by suspending power supply to the peripheral devices. CPU 10 may be placed to the power-saving mode.

In this embodiment, a state of power-off may be one of the following (1)-(3) or any combination of (1)-(3): (1) Power supply to at least one of the peripheral devices, e.g., RAM 17, controllers such as display controller 11, display portion 21, may be suspended or stopped; (2) At least one of the peripheral devices may be placed in a power-saving mode in which power consumption may be more saved than in a normal operation mode of the at least one of the peripheral devices; (3) CPU 10 may be placed in the power-saving mode. The state of power-off may be caused when power key 15 is pressed; when any of operation key 14 is not pressed for a predetermined period of time; or when the remaining amount of battery 22 becomes small.

Display portion 21 may be a non-volatile display portion and may maintain display information even when power supply is suspended from the power source to display portion 21. Thus, while power is saved, the display information may be viewed in display portion 21 even in a state of power-off.

Device 1 may be configured to read or write data from or into an external device 200, via memory card 23. External device 200 may be configured to provide device 1 with data of a content, e.g., a document, and information to be displayed in display portion 21 in a state of power-off, in association with a content. The information to be displayed in display portion 21 in a state of power-off or when power is turned off may be hereinafter simply referred to as "power-off display information."

Device 200 may comprise a central processing unit (CPU) 210, a display controller 211, a memory card interface (I/F) 213, an operation portion 214, a read-only memory (ROM) 216, a random access memory (RAM) 217, a hard disk drive (HDD) 218, and a display portion 221.

CPU 210 may perform controls of device 200. ROM 216 may store various data and programs for operating device 200. RAM 217 may temporarily store various data. HDD 218 may be a non-volatile storage medium configured to store various data for device 200. Display controller 211 may control display portion 221 to display information therein. Memory card I/F 213 may control reading/writing of data from/into memory card 23.

Device 200 may be used to provide device 1 with data of a content, via memory card 23. Device 200 may also be used to set power-off display information in association with a content.

Device 1 may communicate with server 300 via a communication network (not shown). Server 300 may be configured to provide device 1 with data of a content, e.g., a document, and data of power-off display information in association with the content.

Server 300 may comprise a central processing unit (CPU) 310, a read-only memory (ROM) 316, a random access memory (RAM) 317, a hard disk drive (HDD) 318, a communication controller 324, and a communication unit 325 .

CPU 310 may perform controls of server 300. ROM 316 may store various data and programs for operating server 300. RAM 317 may temporarily store various data. HDD 318 may be a non-volatile storage medium configured to store various data for server 300. Communication controller 324 may control communication unit 325 to allow communication unit 325 to communicate with other devices, e.g., device 1.

Server 300 may be used to provide device 1 with data of a content, via the communication network (not shown) and to update power-off display information corresponding to a content.

Display controller 11 of device 1 may be configured to control a gate driver (not shown) and a source driver (not shown) of display portion 21 to rewrite information displayed in display portion 21, based on a rewriting instruction received from CPU 10. Display portion 21 may comprise an electrophoretic display panel (not shown), a gate driver configured to output a gate signal to respective gate lines of the electrophoretic display panel, and a source drive configured to output a source signal to respective source lines of the electrophoretic display panel. The electrophoretic display panel may be of an active matrix type. The electrophoretic display panel may comprise a transparent substrate positioned on a front side, e.g., a viewing side, and a rear substrate positioned opposite to the transparent substrate. Electrophoretic display elements may be positioned between the transparent substrate and the rear substrate. The active matrix type-display panel may be configured to rewrite information by applying voltage to a common electrode positioned on the transparent substrate and a pixel electrode positioned on the rear substrate for each pixel. As the date driver and the source driver receive the rewriting instruction from display controller 11, the date driver and the source driver may be configured to output the gate signal and the source signal corresponding to the information to be rewritten, to the gate lines and the source lines, respectively. Voltage for controlling the electrophoretic display elements may be applied to each pixel electrode to rewrite information displayed in the display panel.

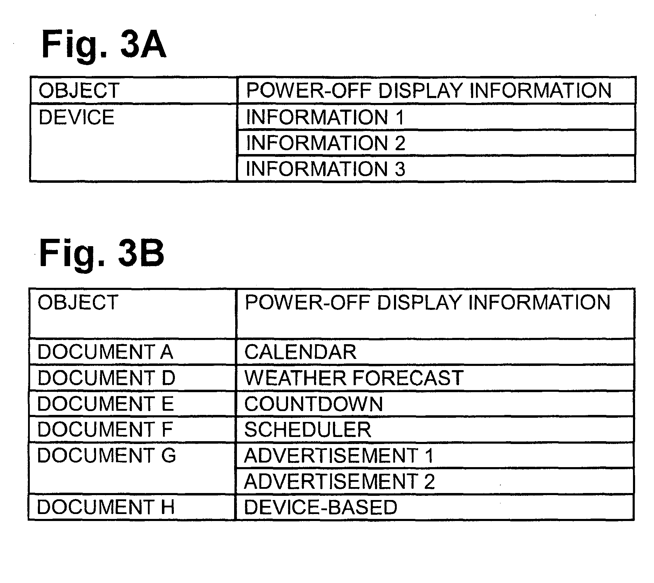

A power-off display table shown in Figs. 3A and 3B may be referred to, to determine power-off display information. The power-off display table may comprise a power-off display table for device, as shown in Fig. 3A, and a power-off display table for contents, as shown in Fig. 3B. The power-off display table for device may store settings of power-off display information for device 1. The power-off display table for contents may store settings of power-off display information for each of contents. The power-off display table may be stored in EEPROM 18 or memory card 23. More specifically, the power-off display table for device may be stored in EEPROM 18 and power-off display table for contents may be stored in memory card 23. Operation keys 14 or operation portion 214 may be operated to make settings of the power-off display information in the power-off display table. The power-off display table may store settings of the power-off display information in correspondence with an object for which power-off display information is set, as shown in Figs. 3A and 3B.

Settings of power-off display information may comprise a device-based setting. With the device-based setting, the power-off display information may be determined based on the settings in the power-off display table for device. The device-based setting may be set only in the power-off display table for contents. The device-based setting may be set to a content as a default setting. For example, the device-based setting may be set to document H in the power-off display table for contents, as shown in Fig. 3B. When power is turned off while document H is being displayed in display portion 21, the power-off table for device, as shown in Fig. 3A, may be referred to, and information 1, information 2 and information 3 may appear in display portion 21 accordingly.

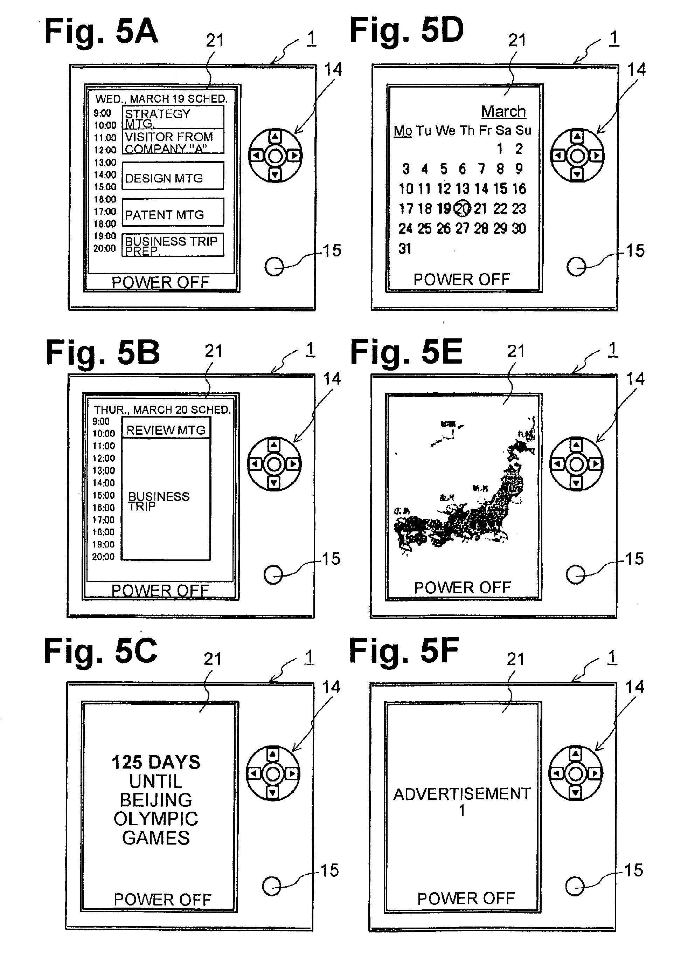

Updatable or unupdatable power-off display information may be set to an object in the power-off display table. The updatable power-off display information may display a plurality of pieces of information. The updatable power-off display information may be, for example, schedule as shown in Figs. 5A and 5B, countdown to count down dates to an event, as shown in Fig. 5C, a calendar as shown in Fig. 5D, and a weather forecast that may be updated at certain times as shown in Fig. 5E. For example, updatable power-off information may be set to each of documents A, D, E, and F, as shown in Fig. 3B. The unupdatable power-off display information may display one piece of information, e.g., information 1-3, as shown in Fig. 3A, and advertisements 1 and 2 set to document G, as shown in Fig. 3B.

A plurality of pieces of power-off display information may be set to one object, e.g., as shown in Fig. 3A, as well as document G as shown in Fig. 3B. Even if unupdatable power-off display information is set to one object, a plurality of pieces of information may be changeably displayed in display portion 21 by setting a plurality of pieces of power-off display information to one object.

EEPROM 18 or memory card 23 may store the power-off display table, as described above. EEPROM 18 and memory card 23 may also store data of contents, as well as data of images relating to, for example, information 1-3, calendar, weather forecast, countdown, scheduler, advertisements 1 and 2 that may be set as power-off display information.

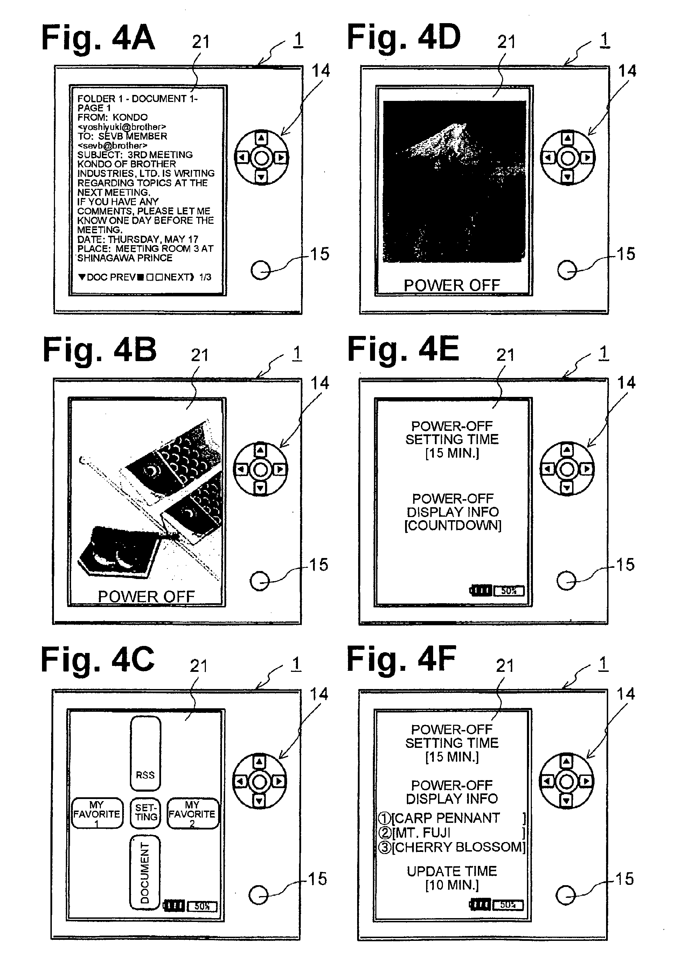

Display portion 21 may display various information, such as e-mail message shown in Fig. 4A, when power is on. A lower portion of a display area of display portion 21, e.g., a footer portion, may display information, such as a page number.

In a state of power-on, when power key 15 is pressed, or any of operation keys 14 is not pressed for the period of the power-off setting time, power may be turned off. At this time, display portion 21 may display the set power-off display information, e.g. an image of a carp pennant, and such a message "Power off' at the lower portion of the display area of display portion 21, as shown in Fig. 4B.

When power key 15 or any of operation keys 14 is pressed in a state of power-off, as shown in Fig. 4B, power may be turned on. At this time, display portion 21 may display such a top page shown in Fig. 4C, in its display area.

In a state of power-off as shown in Fig. 4B, when power key 15 is not pressed for a certain period of time, power-off display information, e.g., an image of Mount Fuji as shown in Fig. 4D, different from the power-off display information shown in Fig. 4B, may be displayed in display portion 21. More specifically, as a certain period of time has elapsed since power is turned off, power may be turned on and information that was displayed in a state of power-off may be changed or replaced with another power-off display information.

With operations of operation keys 14, display portion 21 may display such a screen showing the power-off setting time and the power-off display information for device 1, shown in Fig. 4E. The power-off setting time and the power-off display information for device 1 may be changed with operations of operation keys 14. When any operation key 14 is not operated in a state of power-on for a period of the power-off setting time, power may be turned off, as described above.

A plurality of pieces of power-off display information may be set for device 1, as shown in Fig. 4F. When a plurality of pieces of power-off display information is set for device 1, the display order of the pieces of power-off display information may be set. The power-off display information may be set for device 1 with an operation in device 1. The power-off display information may be set for a content with an operation in external device 200.

When pieces of power-off display information is set, power-off display information displayed in display portion 21 may be changed or updated every update time, e.g., 10 minutes, that may be set in EEPROM 18.

When such a setting shown in Fig. 4F is made, a first power-off display information, e.g., an image of the carp pennant shown in Fig. 4B may be displayed in display portion 21 if any operation keys 14 are not operated for 15 minutes. Then, power may be turned off. Thereafter, if the period of update time, e.g., 10 minutes, has elapsed without an operation of any operation key 14, a second power-off display information, e.g., an image of Mount Fuji, as shown in Fig. 4D, may be displayed in display portion 21. Thereafter, if the period of update time, e.g., 10 minutes, has elapsed without an operation of any operation key 14, a third power-off display information, e.g., an image of cherry blossom, may be displayed in display portion 21. Thereafter, if the period of update time, e.g., 10 minutes, has elapsed without an operation of any operation key 14, the first power-off display information, e.g., carp pennant, may be displayed in display portion 21.

When schedule is set as power-off display information schedule of a day may be displayed in display portion 21 in a state of power-off, based on date information. The date information may represent year, month and day of a present day and may be updated based on the time measured by RTC 19. The date information may be stored in EEPROM 18. The schedule of a day e.g., March 19, corresponding to the date of the date information may be displayed in display portion 21, as shown in Fig. 5A. When power is still off at a timing when the date information is updated, power may be temporarily turned on. Based on the updated date information, the schedule of the next day, e.g., March 20, may be displayed in display portion 21, as shown in Fig. 5B.

For example, when a countdown as shown in Fig. 5C or a calendar as shown in Fig. 5D is set as power-off display information, updated countdown or calendar may be displayed in display portion 21, as power, which is off, may be temporarily turned on at a predetermined timing, e.g., when the date information is updated, similar to the above schedule. For example, when a weather forecast as shown in Fig. 5E is set as the power-off display information, the updated weather forecast may be displayed in display portion 21 as power, which is off, may be temporarily turned on at a predetermined timing, e.g., every few hours. This embodiment is discussed in conjunction with power-off display information that may be pre-stored in memory card 23. Nevertheless, when power is temporarily turned on, power-off display information corresponding to that time may be obtained from server 300, via communication unit 25.

An advertisement, such as shown in Fig. 5F, may be set as power-off display information, in association with a content. For example, an advertisement of a comic book may be set as power-off display information for a content, e.g., weekly comic magazine. When a user downloads a weekly comic magazine from a server 300 via a communication network, the weekly comic magazine may be downloaded together with an advertisement of a comic book. If the content of the weekly comic magazine is displayed in display portion 21 immediately before power is off, the advertisement of the comic book may be displayed when power is turned off, in association with the weekly comic magazine. For example, an advertisement of the publication date of a comic book may be changed to an advertisement of the comic book being on sale, at the timing when the comic book is published.

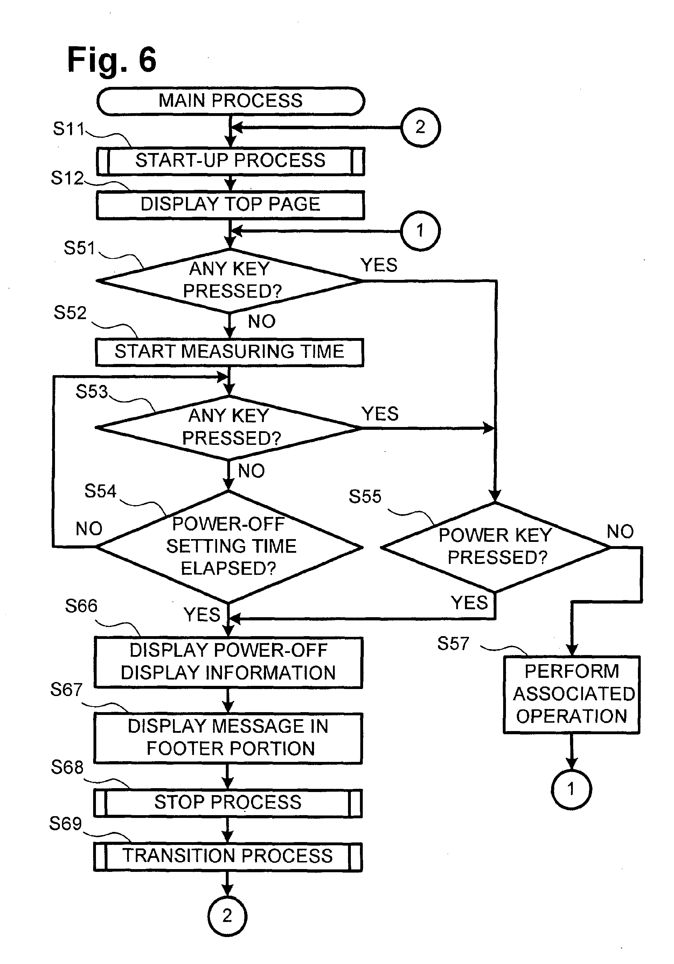

A main process shown in Fig. 6 may be started when power is turned on, e.g., when power key 15 or any of operation keys 14 is pressed.

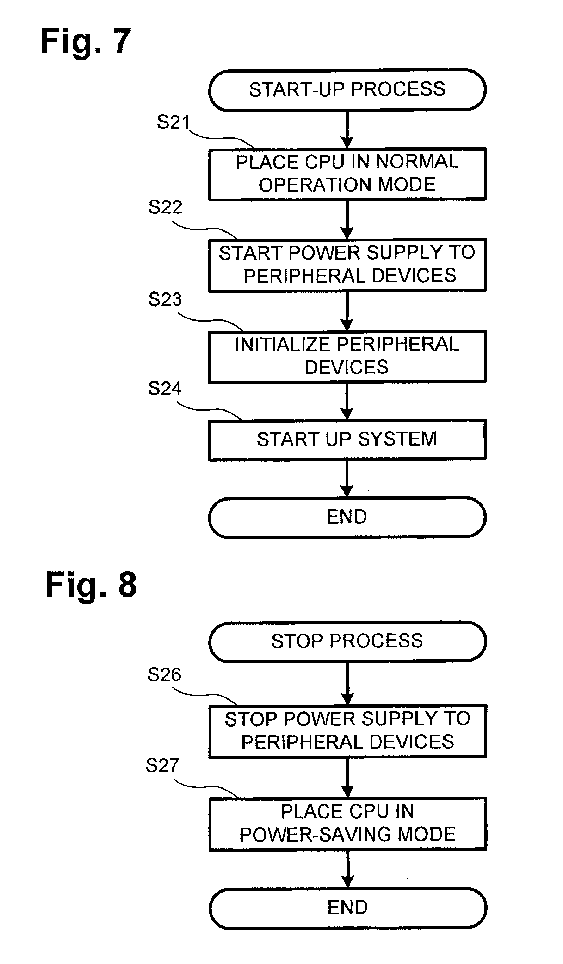

CPU 10 may execute a start-up process in step S11 to start up device 1. The start-up process will be described in detail later, referring to Fig. 7. CPU 10 may display a top page, such as shown in Fig. 4C, in display portion 21 in step S12.

Thereafter, CPU 10 may determine whether any key, e.g., operation keys 14 or power key 15, is pressed in step S51. When CPU 10 determines that any key is pressed (S51: YES), flow may proceed to step S55. When CPU 10 determines that any key is not pressed (S51: NO), time measurement may start in step S52 to measure a power-off setting time. Then, flow may proceed to step S53.

CPU 10 may determine in step S53 whether any key is pressed. When CPU 10 determines that any key is pressed (S53: YES), flow may proceed to step S55. When CPU 10 determines that any key is not pressed (S53: NO), CPU 10 may determine whether the power-off setting time has elapsed in step S54. When CPU 10 determines that the power-off setting time has elapsed (S54: YES), flow may proceed to step S66. When CPU 10 determines that the power-off setting time has not elapsed (S54: NO), flow may return to step S53.

CPU 10 may determine in step S55 whether power key 15 is pressed. When CPU 10 determines that power key 15 is pressed (S55: YES), flow may proceed to step S66. When CPU 10 determines that power key 15 is not pressed (S55: NO), an operation may be performed in association with the pressed key in step S57. Then, flow may return to step S51.

CPU 10 may proceed to step S66 when a power-off setting time has elapsed without an operation of any keys in a state of power-on or when power key 15 is pressed in a state of power-on.

CPU 10 may display power-off display information, based on settings in the power-off display table, in step S66. CPU 10 may read from the power-off display table for contents a setting corresponding to the content displayed in display portion 21 in a state of power-on before power is turned off. Based on the setting, power-off display information may be displayed in display portion 21.

When a plurality of pieces of power-off display information is set for a content, CPU 10 may display in display portion 21 a piece of power-off display information that may be set as the first information to be displayed. When the power-off display table for contents does not store a setting of power-off display information for a content displayed in display portion 21 in a state of power-on, power-off display information for the content may be displayed based on the settings in the power-off display table for device.

When the device-based setting is set in the power-off display information for contents for a content being displayed in display portion 21, CPU 10 may display in display portion 21, power-off display information set in the power-off display table for device, in a state of power-off.

CPU 10 may display the message, "Power-Off' in the footer portion in step S67. Then, flow may proceed to S68. CPU 10 may execute a stop process in step S68 to stop device 1. The stop process will be described in detail later with reference to Fig. 8.

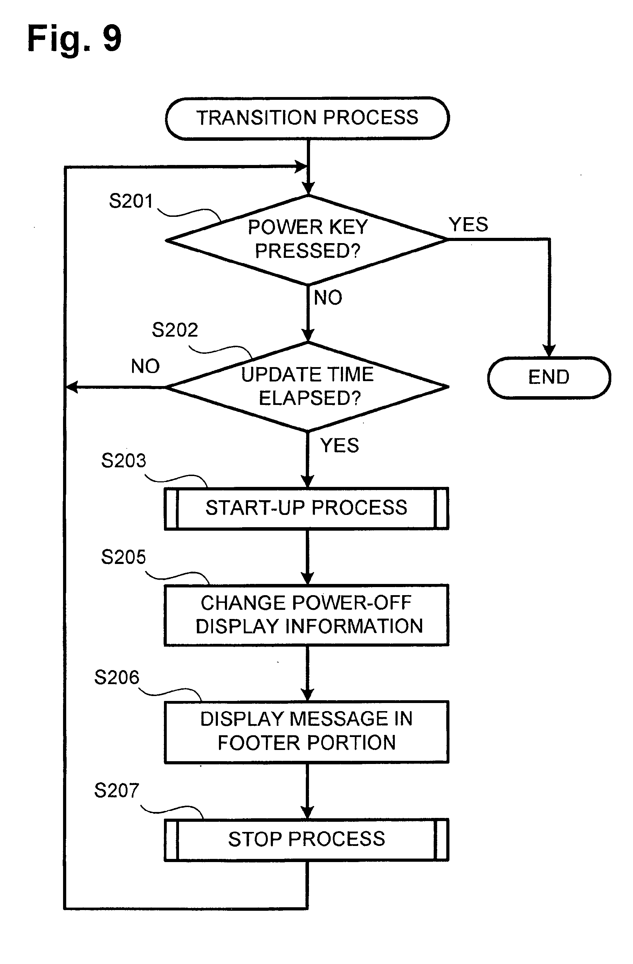

After step S68, flow may proceed to step S69 in which CPU 10 may execute a transition process. With the transition process, power may be temporarily turned on to change information displayed in a state of power-off, and then power may be turned off again. The transition process will be described in detail later with reference to Fig. 9. Thereafter, flow may proceed to step S11.

The start-up process, as shown in Fig. 7, may be invoked in step S11 of Fig. 6. In step S21, an operational mode of CPU 10 may change from a power-saving mode to a normal operation mode. Then, power supply to the peripheral devices may start in step S22. CPU 10 may initialize the peripheral devices in step S23. CPU 10 may start up a system in step S24. With the start-up of the system, subsequent steps may be performed.

The stop process, as shown in Fig. 8, may be invoked in step S68 of Fig. 6. CPU 10 may suspend power supply to the peripheral devices in step S26. The operation mode of CPU 10 may change to the power-saving mode in step S27. Thus, device 1 may be placed in a state of power-off.

The transition process, as shown in Fig. 9, may be invoked in step S69 of Fig. 6. CPU 10 may determine in step S201 whether power key 15 is pressed. When CPU 10 determines that power key 15 is pressed (S201: YES), this process may end and flow may proceed to step S11 of Fig. 6. Press of power key 15 in a state of power-off may cause power to be turned on. When CPU 10 determines that power key 15 is not pressed (S201: NO), flow may proceed to step S202.

In step S202, CPU 10 may determine whether an update time corresponding to the power-off display information displayed in display portion 21 has elapsed. More specifically, if a schedule, countdown or calendar is set as the power-off display information in association with a content, CPU 10 may determine that the update time has elapsed at a timing when the date information is updated. If a weather forecast is set as the power-off display information in association with a content, CPU 10 may determine that the update time has elapsed every certain hours. When a plurality of pieces of power-off display information is set for a content, CPU 10 may determine that the update time has elapsed based on the lapse of the update time preset in EEPROM 18.

When CPU 10 determines that the update time has not elapsed (S202: NO), flow may returned to step S201. When CPU 10 determines that the update time has elapsed (S202: YES), flow may proceed to step S203.

CPU 10 may execute the start-up process in step S203 to start up device 1. CPU 10 may change the power-off display information in step S205. CPU 10 may temporarily turn power on at a timing when the update time has elapsed, to change the information displayed in display portion 21.

CPU 10 may display a message, e.g., "Power off' in the footer portion in step S206. CPU 10 may execute the stop process in step S207. Then, flow may return to step S201.

In a state of power-off, CPU 10 may repeatedly turn power on at a predetermined timing, e.g., a preset time or a preset period of time, to change information displayed in display portion 21.

Even in a state of power-off, power may be turned on at a predetermined timing to change information displayed in display portion 21.

The timing when information is changed may be preset to a time or period of time, which may make a user recognize the time or period of time. Changing or updating e.g., schedule, calendar, or countdown, every preset time or period of time may be convenient.

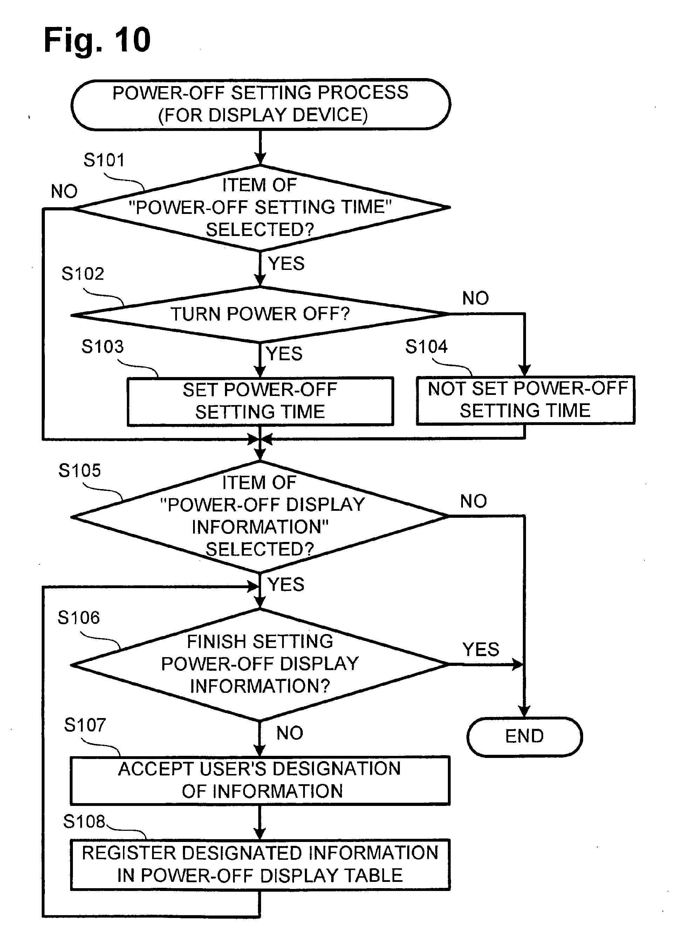

Referring to Fig. 10, a power-off setting process may be performed in device 1 to set a power-off setting time and/or power-off display information. When a user performs a predetermined operation in device 1 in a state of power-on, such a screen shown in Fig. 4F may appear. Thereafter, the power-off setting process may be invoked. The screen may comprise items to set a power-off setting time and power-off display information.

In the power-off setting process, CPU 10 may determine in step S101 1 whether the item of "power-off setting time" is selected with operations of operation keys 14. When CPU 10 determines that the item of "power-off setting time " is selected (S101: YES), CPU 10 may display such a message to encourage a user to select whether an auto-power off function to automatically turn power off is enabled, and accept a user's selection with operation keys 14. CPU 10 may determine in step S102 whether the auto-power off function power is enabled, e.g., power is turned off after lapse of the setting time, based on the user's selection. When CPU 10 determines that power is turned off after lapse of the setting time (S102: YES), CPU 10 may display such a message to encourage a user to input the power-off setting time. CPU 10 may set the value input by the user as the power-off setting time and may display such a screen shown in Fig. 4F again in step S103. Then, flow may proceed to step S105. When CPU 10 determines that power is not turned off after lapse of the power-off setting time (S102: NO), CPU 10 may not set the power-off setting time and may display such a screen shown in Fig. 4F again in step S104. Then, flow may proceed to step S105. When CPU 10 determines that the item of "power-off setting time" is not selected (S101: NO), flow may proceed to step S105.

CPU 10 may determine in step S105 whether an item of "power-off display information" is selected with operations of operation keys 14. When CPU 10 determines that the item is selected (S105: YES), CPU 10 may display such a message to encourage a user to set the power-off display information and determine whether an operation to set power-off display information is finished in step S106. When CPU 10 determines that the operation to set power-off display information is not finished (S106: NO), flow may proceed to step S107. When CPU 10 determines that an operation to set power-off display information is finished (S106: YES), or the item of "power-off display information" is not selected (S105: NO), flow may end.

In step S107, CPU 10 may accept a user's designation of the information to be displayed in a state of power-off, e.g. power-off display information. In step S107, information stored in memory card 23 may be designated.

CPU 10 may register the information designated by a user in the power-off display table for device 1 in step S108. Flow may return to step S106. CPU 10 may store in the power-off display table for device 1, one or more pieces of information (e.g., information 1, information 2, or information 3) designated by a user's operation using operation keys 14.

In the power-off setting process of this embodiment, the update time may not be selected. Nevertheless, such a structure may be adopted that enables the selection of an item of "update time" by a user when a plurality of pieces of power-off display information is set to one object.

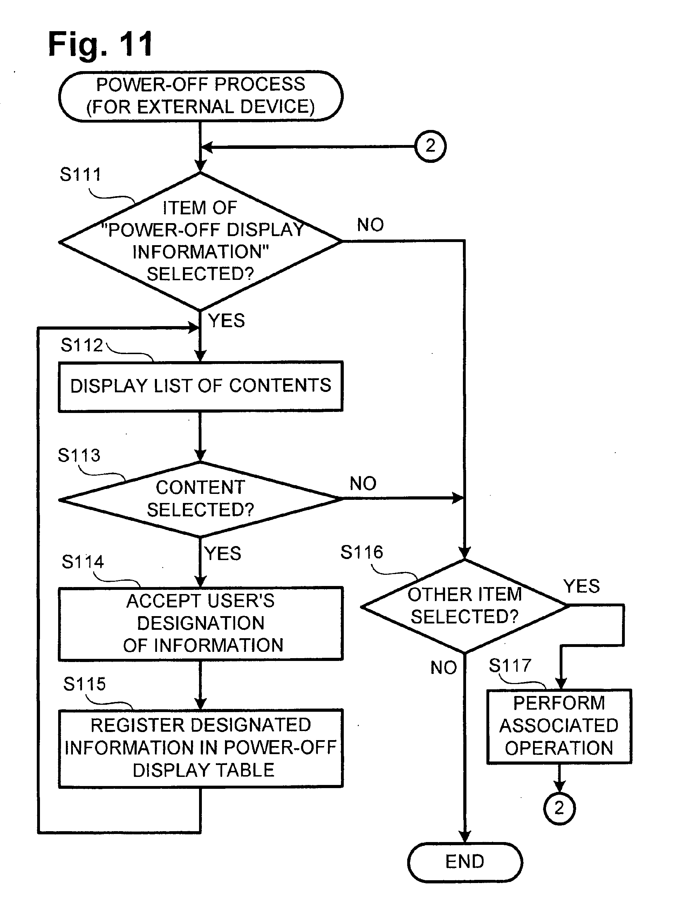

Referring to Fig. 11, a power-off setting process may be invoked with a predetermined operation in external device 200. The process may be executed, after a predetermined operation is performed in external device 200 and a menu screen is displayed in display portion 221. The menu screen may list a plurality of selectable items, one of which may be the "power-off display information". Referring to Fig. 11, CPU 210 may determine in step S111 whether an item of "power-off display information" is selected using operation portion 214. When CPU 210 determines that the item of "power-off display information" is selected (S111: YES), CPU 210 may display a list of contents stored in memory card 23 in display portion 221 and display a message encourage a user to select a content to which the power-off display information may be set in step S112. CPU 210 may accept a user's selection of a content from the list in step S112. CPU 210 may determine in step S113 whether a content is selected. When CPU 210 determines that a content is selected (S113: YES), flow may proceed to steps S114. When CPU 210 determines that the item of "power-off display information" is not selected (S111: NO), or a content is not selected (S113: NO), flow may proceed to step S116. In step S116, CPU 210 may determine whether other item is selected from the menu. When CPU 210 determines that other item is selected from the menu (S116: YES), an operation associated with the selected item may be performed in S117. Then, flow may returned to step S111. When CPU 210 determines that other item is not selected from the menu (S116: NO), flow may end.

In step S114, CPU 210 may accept a user's designation of information to be displayed in a state of power-off, e.g., power-off display information. In step S114, information stored in memory card 23 or HDD 218 may be designated.

In step S115, CPU 210 may register, in the power-off display table for contents, the information designated by a user as a setting of the power-off display information corresponding to the content selected in step S112. If memory card 23 does not pre-store data, e.g., image data, of the information registered as a setting of power-off display information in the power-off display table for contents, CPU 210 may store the data of the information designated by a user in memory card 23 in step S115. Then, flow may return to step S112. CPU 210 may store, in the power-off display table for contents, one or more pieces of information (e.g., advertisements 1 and 2 set to document G as shown in Fig. 3B) selected using operation portion 214, as the information associated with a content displayed in a state of power-on immediately before power is turned off. With operations of operation portion 214, CPU 210 may store the information to be displayed in a state of power-off in association with a content, in memory card 23. CPU 10 of device 1 may read memory card 23 and display the information, advertisements 1 and 2 set to document G, in association with the content being displayed immediately before power is turned off.

Device 1 may change the information displayed in display portion 21 by repeatedly turning power on at a predetermined timing in a state of power-off. Therefore, even in a state of power-off, power may be turned on at a predetermined timing to change information displayed in display portion 21.

CPU 10 may correspond to a controller. Display portion 21 may correspond to a non-volatile display portion. Operation keys 14 may correspond to an operation device. EEPROM 18 and memory card 23 may correspond to an information storage portion.

In the above-described embodiment, the power-off display table for device shown in Fig. 3A may be updated in device 1. The power-off display table for contents shown in Fig. 3B may be updated in external device 200. In another embodiment, the power-off display table for contents may be updated in device 1. The power-off display table for device may be updated in external device 200.

In the above embodiment, power-off display information may be set for each content. In another embodiment, power-off display information may be set according to types or category of contents, folders containing contents, content names, e.g., the first letter of the contents, confidentiality of contents, security levels of contents, or time when power is turned off. In another embodiment, power-off display information associated with information displayed in display portion 21 may be stored in a folder, which may store the information displayed in display portion 21. In yet another embodiment, power-off display information associated with information displayed in display portion 21 may be the same information type as that of the information displayed in display portion 2

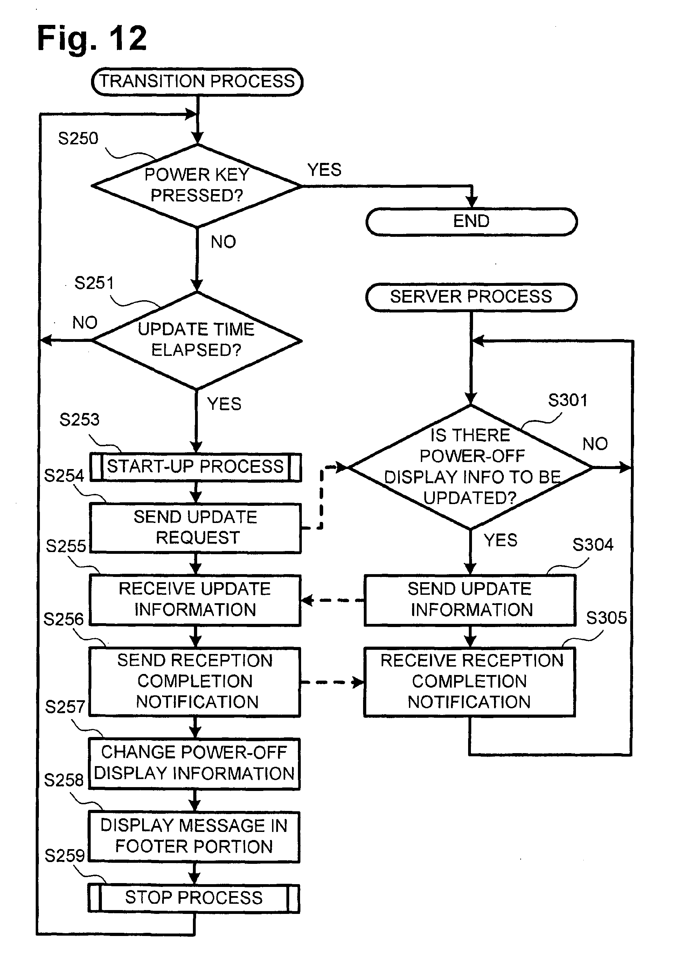

Further, power may be temporarily turned on at a timing when a content or power-off display information associated with the content is downloaded from server 300 via a communication network, to change power-off display information. A content or power-off display information downloaded from server 300 may be a new content or information, or an update content or information. Such process will be described with reference to Fig. 12.

A transition process of Fig. 12 may be invoked in step S69 of Fig. 6. CPU 10 may determine in step S250 whether power key 15 is pressed. When CPU 10 determines that power key 15 is pressed (S250: YES), the process will end and flow may proceed to step S11 of Fig. 6. When CPU 10 determines that power key 15 is not pressed (S250: NO), flow may proceed to step S251.

CPU 10 may determine in step S251 whether the update time corresponding to a content being displayed in display portion 21 has elapsed, similar to step S202 of Fig. 9.

When CPU 10 determines that the update time has not elapsed (S251: NO), flow may return to step S250. When CPU 10 determines that the update time has elapsed (S251: YES), flow may proceed to step S253.

CPU 10 may execute the start-up process in step S253. CPU 10 may send an update request to sever 300 in step S254.

CPU 310 of server 300 may determine in step S301 whether there is power-off display information to be updated, e.g., an update request is received from device 1. When CPU 310 determines that there is power-off display information to be updated (S301: YES), flow may proceed to step S304. When CPU 310 determines that there is no power-off display information to be updated (S301: NO), flow may return to step S301. Thus, CPU 310 may successively monitor whether there is power-off display information to be updated, e.g., device 1 sends the update request to server 300.

When CPU 310 determines that there is power-off display information to be updated in step S301 (S301: YES), CPU 310 may send update power-off display information in step S304. Thereafter, flow may proceed to step S305 in which CPU 310 may receive reception completion notification from device 1. Then, flow may return to step S301.

CPU 10 of device 1 may receive the update power-off display information from server 300 in step S255. CPU 10 may send reception completion notification to server 300 in step S256.

CPU 10 may replace the power-off display information that has been displayed in display portion 21 with the received power-off display information in step S257.

CPU 10 may display a message, e.g., "Power off' at the footer portion in step S258. CPU 10 may execute the stop process in step S259. Then, flow may return to step S250.

CPU 10 may request for update information to server 300 which may store information to be displayed in display portion 21, after power is turned on at a predetermined timing. CPU 10 may receive the update information from server 300 to change the information displayed in display portion 21.

Therefore, CPU 10 may receive the update information from server 300 in reply to a request to server 300. CPU 10 may replace the information displayed in display portion 21 with the information stored in server 300, which may be convenient.

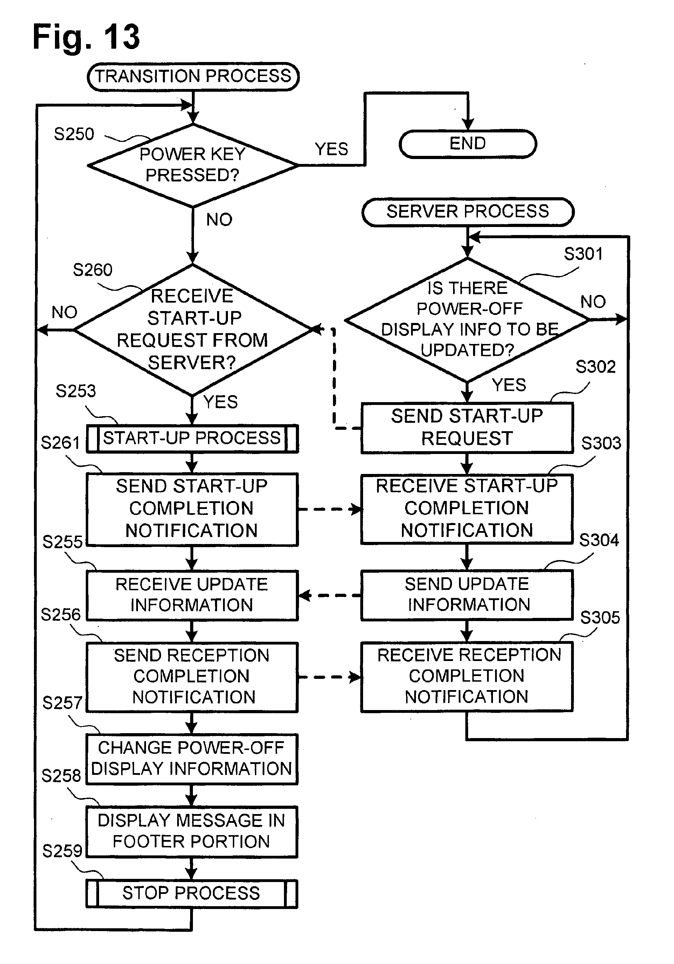

In the above embodiment, power-off display information may be changed by making a request from device 1 to server 300. In another embodiment, power-off display information may be changed by making a request from server 300 to device 1, as shown in Fig. 13.

A transition process of Fig. 13 may be invoked in step S69 of Fig. 6. When CPU 20 determines that power key 15 is not pressed (S250: NO), CPU 10 may determine in step S260 whether a start-up request is sent from server 300.

When CPU 310 determines, based on information pre-stored in server 300, that there is power-off display information to be updated (S301: YES), CPU 310 may determine a device to which the update power-off display information is sent. CPU 310 may refer to a record of transmitted power-off display information, which is associated with the update power-off display information. In step S302, CPU 310 may send a start-up request to device 1 to which the updated power-off display information may be transmitted.

When CPU 10 receives the start-up request from server 300 (S260: YES), flow may proceed to step S253 in which the start-up process may be performed, similar to step S253 of Fig. 12.

CPU 10 may determine, in a state of power-off, a predetermined timing based on the time when CPU 10 receives the start-up request from server 300, which stores the information to be displayed in display portion 21. At the predetermined timing, power may be turned on to receive the update information.

CPU 10 may receive and obtain the update information from server 300 and change the information displayed in display portion 21. Thus, information displayed in display portion 21 may be replaced with information stored in server 300, which may be convenient.

Memory card 23 may store data of contents or information about settings of the power-off display table. Nevertheless, EEPROM 18 of device 1 may store data of contents or information about settings of the power-off display table, via a USB cable.

While the invention has been described in connection with various exemplary structures and illustrative embodiments, it will be understood by those skilled in the art that other variations and modifications of the structures and embodiments described above may be made without departing from the scope of the invention. Other structures and embodiments will be apparent to those skilled in the art from a consideration of the specification or practice of the invention disclosed herein. It is intended that the specification and the described examples are illustrative with the true scope of the invention being defined by the following claims.

## Claims

1. A portable display device comprising:
a non-volatile display portion (21) configured to display information even when power from a power source is turned off; and
a controller (10) configured to drive the display portion (21) to display information in the display portion (21);
wherein the controller (10) is configured to replace information displayed in the display portion (21) with another information, which is different from the information being displayed in the display portion (21), by turning power on repeatedly at a predetermined timing in a state of power-off.

2. The portable display device of claim 1, wherein the predetermined timing may be a preset time or a preset period of time.

3. The portable display device of claim 1 or 2, wherein the controller (10) is configured to request for the another information to an external device (200, 300) that stores the another information, after power is turned on at the predetermined timing, to obtain the another information from the external device (200, 300), and is configured to display the another information obtained from the external device (200, 300).

4. The portable display device of claim 1 or 2, wherein the controller (10) is configured to determine the predetermined timing when the controller (10) receives a request of start-up of the portable display device (1) from an external device (200, 300) that stores the another information, is configured to turn power on at the predetermined timing to obtain the another information from the external device (200, 300), and is configured to display the another information in the display portion (21).

5. The portable display device of claim 1 or 2, further comprising an information storage portion (18, 23) configured to store one or a plurality of pieces of information to be displayed in the display portion (21) in the state of power-off, wherein the controller (10) is configured to select one piece of information to be displayed in the display portion (21) from the plurality of pieces of information stored in the information storage portion (18, 23) repeatedly at the predetermined timing and is configured to display the one piece of information in the display portion (21).

6. The portable display device of claim 5, wherein the controller (10) is configured to display, in the state of power-off, information associated with the information displayed in the display portion (21) immediately before power is turned off, among the plurality of pieces of information stored in the information storage portion (18, 23).

7. The portable display device of claim 6, wherein the information associated with the information displayed in the display portion (21) is stored in a folder, which stores the information displayed in the display portion (21), or is the same information type as that of the information displayed in the display portion (21).

8. A computer readable medium having computer readable instruction stored thereon, which, when executed by a processor of a portable display device (1) comprising a non-volatile display portion (21) configured to display information even when power from a power source is turned off; and a controller (10) configured to drive the display portion (21) to display information in the display portion (21), configures the processor to perform the steps of replacing information displayed in the display portion (21) with another information, which is different from the information being displayed in the display portion (21), by turning power on repeatedly at a predetermined timing in a state of power-off.
